# FASCICULE DE BREVET EUROPEEN

(11) **EP 3 852 012 B1**
(45) Date de publication et mention de la délivrance du brevet: **12.07.2023**
(21) Numéro de dépôt: 21305011.5
(22) Date de dépôt: 05.01.2021
(51) Int. Cl.: G06K 17/00, G06K 19/06, G06Q 50/20

(54) **SUPPORT POUR RÉVISIONS**
HALTERUNG FÜR REVISIONEN
SUPPORT FOR REVISIONS

(30) Priorité: 07.01.2020 FR 2000101
(43) Date de publication de la demande: 21.07.2021
(73) Titulaire: Holdham, 14200 Hérouville-Saint-Clair (FR)
(72) Inventeur: JOAN, Éric, 14280 Saint Contest (FR)
(74) Mandataire: Lefevre-Groboillot, David André

(56) Documents cités:
- US-A1- 2014 050 396
- US-B1- 9 235 768
- US-B1- 10 127 468

## Description

Les lycéens et étudiants doivent effectuer des révisions pour leurs examens. D'autres personnes, au cours de leur vie active, ou lors d'une reprise d'études, passent également des examens et doivent les préparer, en révisant différentes thématiques.

Il est proposé une gamme de cartes classifiées, par lots de, par exemple, 80 cartes. La gamme comprend par exemple 12 couleurs différentes. Les cartes d'un lot peuvent être toutes de la même couleur, ou être de diverses couleurs. En réunissant plusieurs lots, il est en tout cas possible de disposer de cartes de toutes les couleurs de la gamme. Chaque couleur définit une catégorie ou une thématique.

Les cartes sont par exemple en papier cartonné blanc avec, sur une face, une bordure colorée définissant la catégorie. La face peut porter une réglure. Cette face est une face utile sur laquelle l'utilisateur appose des informations manuscrites aux fins de ses révisions, avec un stylo, un feutre ou un crayon. L'autre face peut aussi servir pour la prise de notes. Des réglures identiques peuvent être présentes sur les deux côtés, mais il est aussi possible que les deux faces soient sans réglure, ou avec des réglures différentes, ou que seule une des faces porte une réglure.

Les cartes présentent, sur la face mentionnée, des marqueurs de coin aisément identifiables par un logiciel analysant une photographie de la face utile de la carte prise à la volée par exemple avec un téléphone intelligent (smartphone). Le logiciel intelligent peut être exécuté par le processeur du téléphone intelligent. Le téléphone intelligent peut être remplacé par une tablette informatique. Le logiciel, repérant les quatre coins grâce aux marqueurs de coin, peut redresser l'image et produire une image redressée qui serait l'image obtenue avec un scanner à plat, bien que la photographie ait été prise à la volée, sans que l'angle solide sous laquelle elle est prise ait été soigneusement choisi de manière maîtrisée.

Le logiciel permet de classer, fusionner, nommer et annoter électroniquement les images des cartes annotées préalablement manuscritement au cours de l'opération initiale de prise de notes.

Si le logiciel est exécuté par un terminal comme un téléphone intelligent ou un ordinateur ou une tablette reliée à Internet, les images peuvent être sauvegardées sur un nuage informatique (cloud).

Il en résulte la possibilité pour l'utilisateur d'utiliser sa solution de révisions en permanence, très facilement, sans contrainte matérielle.

Par convention, la couleur de la carte, parmi par exemple 12 couleurs différentes, correspond à une thématique de révision (ou matière scolaire à réviser). L'oeil de l'utilisateur reconnait aisément les couleurs et les distingue, même si l'éclairage est médiocre, car il suffit de bouger la carte pour disposer de plusieurs vues de celle-ci.

Le logiciel dispose quant à lui uniquement d'une vue fixe et unique de la carte, et distingue les couleurs de carte sur la base d'un code imprimé sur la carte et lisible de manière robuste par machine indépendamment des conditions de prise de la photographie. Ainsi, même avec une luminosité faible ou l'utilisation d'un capteur d'appareil photo numérique de qualité médiocre, la catégorie de la carte est reconnue par lecture du code imprimé lisible par machine. A une valeur du code lisible de manière robuste par machine correspond une et une seule couleur, c'est-à-dire une et une seule catégorie.

L'invention consiste ainsi en un procédé d'indexage d'informations manuscrites, comprenant une étape de fourniture à un utilisateur d'une collection de produits ou supports de papeterie portant chacun une couleur et un code lisible par machine associé de manière unique à la couleur, des étapes de prises de notes manuscrites par ledit utilisateur, chacune sur un produit différent de la collection choisi par l'utilisateur en fonction de la couleur portée par ledit produit, des prises de photographies des produits montrant les notes prises avec un capteur incorporé dans un dispositif portable, par exemple un terminal portable, des étapes de décodage des codes lisibles par machine par exemple par le terminal portable en sorte de déterminer leurs valeurs respectives et le stockage des photographies dans une mémoire par exemple par le terminal avec indexage desdites images en fonction de la valeur du code.

## Revendications

1. Procédé d'indexage d'informations manuscrites, comprenant une étape de fourniture à un utilisateur d'une collection de produits de papeterie portant chacun une couleur et un code lisible par machine associé de manière unique à la couleur, des étapes de prises de notes manuscrites par ledit utilisateur, chacune sur un produit différent de la collection choisi par l'utilisateur en fonction de la couleur portée par ledit produit, des prises de photographies des produits montrant les notes prises avec un capteur incorporé dans un dispositif portable, des étapes de décodage des codes lisibles par machine en sorte de déterminer leurs valeurs respectives et le stockage des photographies dans une mémoire avec indexage desdites images en fonction de la valeur du code.

## Patentansprüche

1. Verfahren zur Indexierung von handschriftlichen Informationen, umfassend einen Schritt des Bereitstellens an einen Benutzer einer Sammlung von Papierprodukten, die jeweils eine Farbe und einen maschinenlesbaren Code aufweisen, der auf eindeutige Weise der Farbe zugewiesen ist, Schritte des Erstellens von handschriftlichen Notizen durch den Benutzer, jede auf einem verschiedenen Produkt der Sammlung, ausgewählt vom Benutzer je nach der Farbe, die das Produkt aufweist, photographische Aufnahmen der Produkte, die die erstellen Notizen zeigen, mit einem Sensor, der in eine tragbare Vorrichtung eingebaut ist, Schritte des Decodierens der maschinenlesbaren Codes, um ihre jeweiligen Werte zu bestimmen, und des Speicherns der Photographien in einem Speicher mit Indexierung der Bilder je nach dem Wert des Codes.

## Claims

1. A method for indexing handwritten information, comprising a step of providing a user with a collection of stationery products each bearing a color and a machine-readable code that is uniquely associated with the color, steps of taking handwritten notes by said user, each on a different product in the collection selected by the user based on the color borne by said product, taking photographs of the products showing the notes which are taken with a sensor incorporated in a mobile device, steps of decoding the machine-readable codes so as to determine their respective values and storing the photographs in a memory with indexing of said images depending on the value of the code.
